# EUROPEAN PATENT SPECIFICATION

(11) **EP 0 703 167 B1**
(45) Date of publication and mention of the grant of the patent: **03.12.1997**
(21) Application number: 95830385.1
(22) Date of filing: 21.09.1995
(51) Int. Cl.: B65G 47/31, B65B 35/44

(54) **A collating device for continuously fed products**
Vorrichtung zum Gruppieren von kontinuierlich zugeführten Gegenständen
Dispositif pour assembler des produits alimentés en continu

(30) Priority: 26.09.1994 IT BO940419
(43) Date of publication of application: 27.03.1996
(73) Proprietor: DIMAC S.P.A., 40064 Ozzano dell'Emilia-Bologna (IT)
(72) Inventor: Bettini, Rodolfo, I-40128 Bologna (IT)
(74) Representative: Lanzoni, Luciano

(56) References cited:
- EP-A- 0 608 861
- CH-A- 646 107
- DE-A- 2 711 702
- DE-A- 3 546 248
- US-A- 3 482 674

## Description

The present invention relates to a collating device for continuously fed products and in particular to a device which can be applied to automatic machinery for shrink-wrapping groups of bottles with different bases (circular, square, rectangular) or metal containers (with circular, box or other shape).

In the field of automatic machinery of this kind, it is well known that the production line (whose function is to divide the products into groups for subsequent packaging in any of a number of different ways) usually consists of the following (see also patent IT - 1.163.831, which corresponds to the preamble of the independent claims): a continuous bottle feed station located upstream of the machine in a bottle feed line where the bottles move along one behind the other in rows of preset width on a horizontal conveyor belt (from now on reference will be made only to bottles, although the solution can also be applied to other types of containers, such as tins or jars, for example); an intermediate collating station where the size of the group (i.e., the number of bottles) to be wrapped is defined and including a second horizontal conveyor belt; a wrapping station where the group of bottles previously separated out is wrapped, preferably shrink-wrapped, in a piece of plastic film.

To separate the bottles out correctly into the preset groups, the initial section of the collating station on the border with the end of the feed station is usually equipped with a separator comb which can move vertically in both directions or which, as is the case in IT-A-1 163 831 can rotate. This separator comb moves in synchrony with the rest of the machine, allowing a preset number of bottles to go past it and moving so as to stop the rest of the bottles and separate the group of bottles that has gone past from the continuous stream of bottles behind it.

Once separated from the stream, the group is transported towards the wrapping station by the conveyor belt of the collating station and with the aid of a chain-driven crossbar which comes into contact with the last row of the group immediately downstream of the separator comb.

In a feed line configured in this way, the speed of the bottle feed station must be much higher than the speed of the collating station so that when the separator comb is raised or rotated again, a sufficient number of bottles (depending on the size of the groups) is able to move past; since the speed Vs of the collating station must be high in order to guarantee that the machine has a good level of productivity, the speed Va (of the feed station) must be even higher (in the order of 50% more), making it difficult to control and increasing the number of bottles which break by falling over or knocking against the separator comb on account of the high feed rate.

This feed system cannot therefore be described as continuous in the strict sense. In fact, the bottles on the conveyor belt of the feed station must be stopped at regular intervals, even though for just an instant at a time; moreover, the separator comb must be changed each time the user has to wrap a product of a different size or shape or to change the number of rows in each group to be wrapped; these frequent changeovers add up to a considerable amount of down time and consequently, to a loss of productivity.

The object of the present invention is to overcome the drawbacks mentioned above by providing a collating device for continuously fed products that is simple in structure and reliable in operation, that does not require changeover and whose various different conveyor belts can operate at practically the same speed.

The technical characteristics of the invention are laid out in the claims below and the advantages of the disclosure are apparent from the detailed description which follows, with reference to the accompanying drawings, which illustrate a preferred embodiment of the invention by way of example and in which:
- Figure 1 is a schematic side view of a collating device for continuously fed products at an initial stage of its work cycle;
- Figures 2, 3, 4 and 5 are schematic side views showing the device illustrated in Fig. 1 during different stages in the collating cycle.

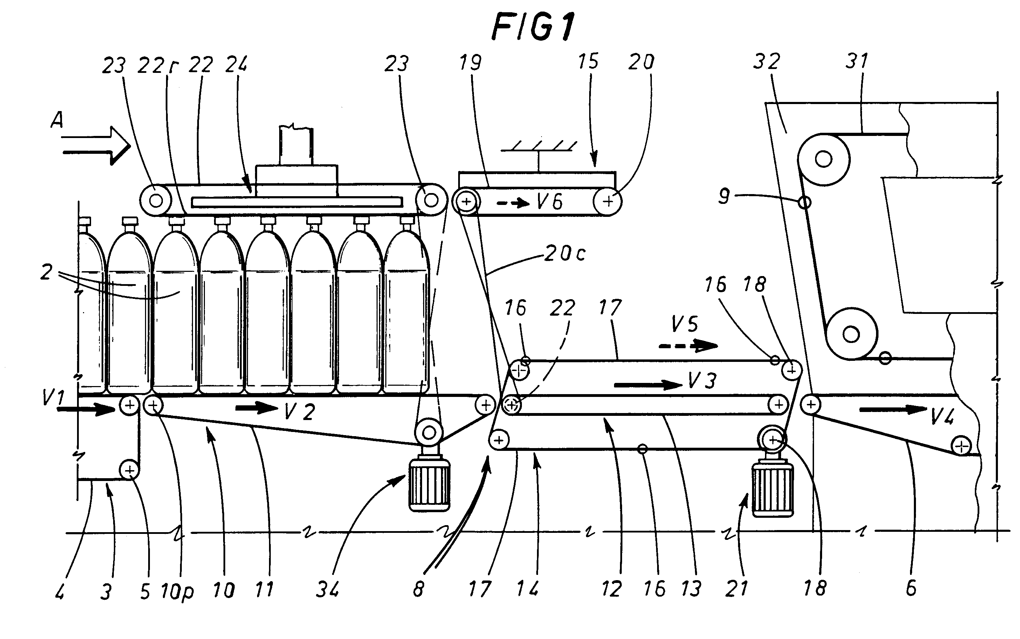

With reference to the drawings listed above and to Fig. 1 in particular, the collating device disclosed by the present invention is designed to be used on machines for continuously collating and packaging groups 1 of products (which, in the embodiment illustrated, are bottles 2).

These machines have several stations; the stations most concerned by the present invention are a continuous feed station 3 through which the bottles 2 move in a direction A (see arrows in Figs. 1, 2 and 5) and are arranged in several rows both crosswise, in such a way as to form a front, and lengthwise; the station 3 consists of a first endless horizontal belt 4 (usually mesh or plastic) fitted over a first series of pulleys 5 which are driven by the main motor of the machine (illustrated only partially since it is of known type) and which move the first belt 4 at a speed V1.

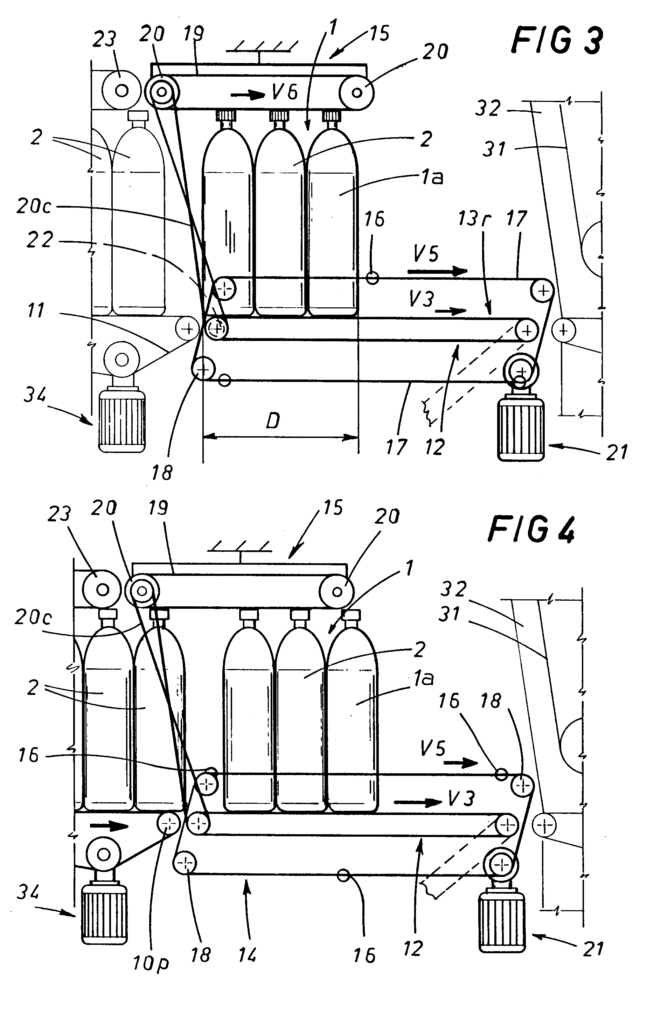

Further downstream of the feed station 3, in the direction of feed A, there is a transfer station operating at a speed V4, where the bottles in the groups 1, whose length D can be preset (see Fig. 3), are fed in the direction of feed A. The transfer station consists of a second endless horizontal belt 6 fitted over a second series of motor-driven pulleys 7 (this station, too, is illustrated partially because it is of the known type).

The groups 1 of bottles 2 are guided onto the second belt 6 by a crossbar 9 (see Fig. 1) which also moves in the direction of feed A; the function of the crossbar 9 is to accompany each incoming group 1 towards a wrapping station (not illustrated because it does not fall within the scope of the inventive concept). The crossbar 9 is supported and driven by bilateral chains 31 at a speed that is greater than or equal to the speed V4 of the second belt 6 and by a supporting structure 32 of the machine (illustrated schematically because it is also of a very well known type and does not fall within the scope of the inventive concept).

Between the feed station 3 and the transfer station 6, there are envisaged collating means 8 which divide the bottles 2 into the preset groups 1 as they move from the feed station 3 to the transfer station 6.

The said means 8 consist basically of a station 10 for precollating and feeding the bottles 2, of a station 12 for collating the bottles into groups 1 and of second accompanying means 14.

The precollating station 10 consists of a third endless horizontal belt 11 fitted over corresponding pulleys 10p, is located at the downstream end of the said feed station 3, again with respect to the direction of feed A, and runs at a speed V2 which is lower than the speed V1 of the feed station 3; the speed V2 may be varied in accordance with the type of bottles 2 or other products to be packaged thanks to a variable speed motor 34 consisting of a high-output servomotor (for example a rare earth brushless motor of known type) independent of the main machine drive and which may be programmed using the machine's control units (not illustrated here because they are of very well known type).

The collating station 12, which separates the bottles 2 into preset groups 1, is located between the precollating station 10 and the transfer station 6 and is equipped with a fourth horizontal belt 13, which runs at a constant speed V3 that is greater than the speed V2 of the precollating station 10. The second accompanying means 14 of the groups 1 of bottles 2 operate on the active branch 13r of the fourth belt 13; these second means 14 run at a speed V5 which varies in accordance with their position with respect to the said active branch 13r and will be described in more detail below. The said second accompanying means 14 consist preferably, but not necessarily, of three crossbars 16, each of which moves round with the belt 13 and through a gap between the third and fourth belts 11 and 13, coming into contact with the bottles 2 when these reach the active branch 13r of the fourth belt 13; the crossbars 16 are equidistant from each other and fixed at both ends to a pair of endless chains 17 fitted over a series of pulleys 18, one of which is driven by a motor 21 independent of the main machine drive system.

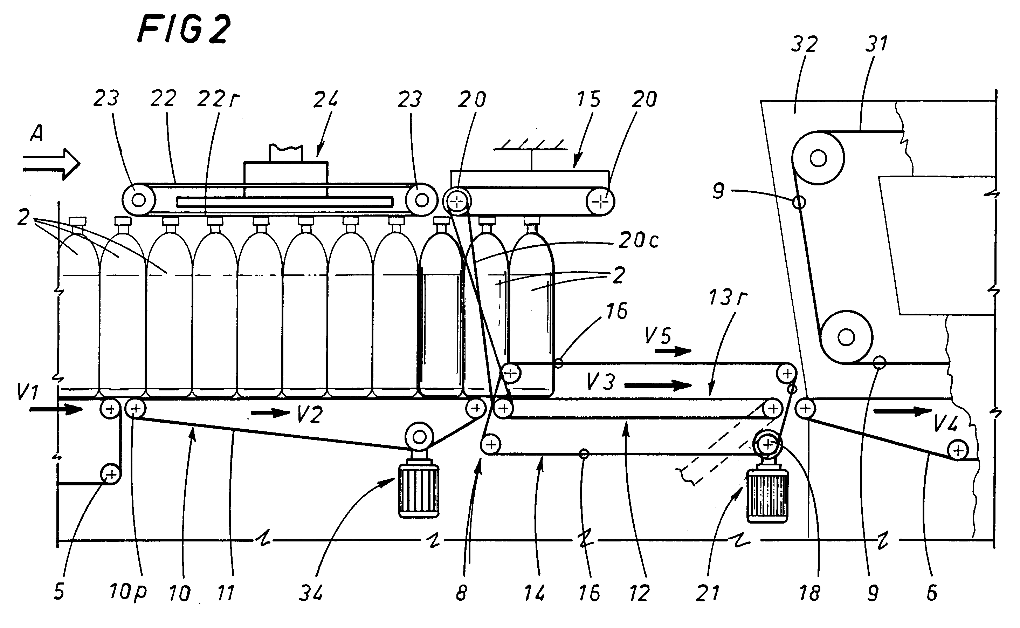

In practice, the speed of the accompanying means 14 is the same as the speed V2 of the third belt 11 on coming into contact with the first bottle 1a on the fourth belt 13 and, obviously, at the outfeed end of the third belt 11; the crossbar 16 moves at this speed for a time equivalent to the distance travelled by a number of bottles 2 defining the size of the group 1 on the fourth belt 13 (see also Figs. 2 and 3), and then accelerates to a speed greater than the speed V3 of the fourth belt 13 in such a way that the group 1 of bottles 2 moves further apart from the remaining front of bottles 2 behind it (see Fig. 4).

To prevent the bottles 2 from falling over during this stage, means 15 are envisaged to stabilize them as they accelerate on the fourth belt 13; these stabilizing means 15 are located partially opposite the fourth belt 13 in the area connecting the third and the fourth belts 11 and 13, and operate directly on the tops of the bottles 2 only during the acceleration of the crossbars 16. The stabilizing means 15 consist of a fifth endless belt 19 fitted over a pair of pulleys 20, one of which is connected by a chain 20c to one of the pulleys of the fourth belt 13 and is equipped with a clutch unit 22 designed to engage and disengage the fifth belt 19 itself.

The speed of the fifth belt 19 and the crossbars 16 is precisely controlled by the motor 21, which is also a rare earth brushless motor and which is designed to vary the speed of the crossbars 16, through an appropriate control unit: the clutch 22 is engaged so as to drive the fifth belt 19 when the motor 21 has already accelerated the crossbars 16.

The aforementioned precollating station 10 also has a sixth belt 22 for stabilizing the bottles 2 as they pass; this sixth belt 22 is located above the active branch of the third belt 11 and forms an endless belt fitted over a pair of idle pulleys 23.

The sixth belt 22 is equipped with presser means 24 which, when the machine stops, operate on the active branch 22r so as to prevent the bottles from blocking the gap through which the crossbars 16 move.

The device structured in accordance with the present invention works as follows. The cycle starts with a continuous stream of bottles 2 to be collated.

The bottle 2 front moves along the first belt 11 at speed V1 until it reaches the third belt 11 which feeds the bottles 2 at a lower speed so as to maintain line feed at a constant level (see Fig.1).

When the first set of bottles 1a reaches the area connecting the third and fourth belts 11 and 13, its front strikes one of the crossbars 16 which keeps the bottles going at speed V2 for a few instants and then accelerates the bottles to speed V3 at which the fourth belt 13 is running; at this moment, the fifth belt 19 is activated to stabilize the bottles 2 during their acceleration (see Fig. 2).

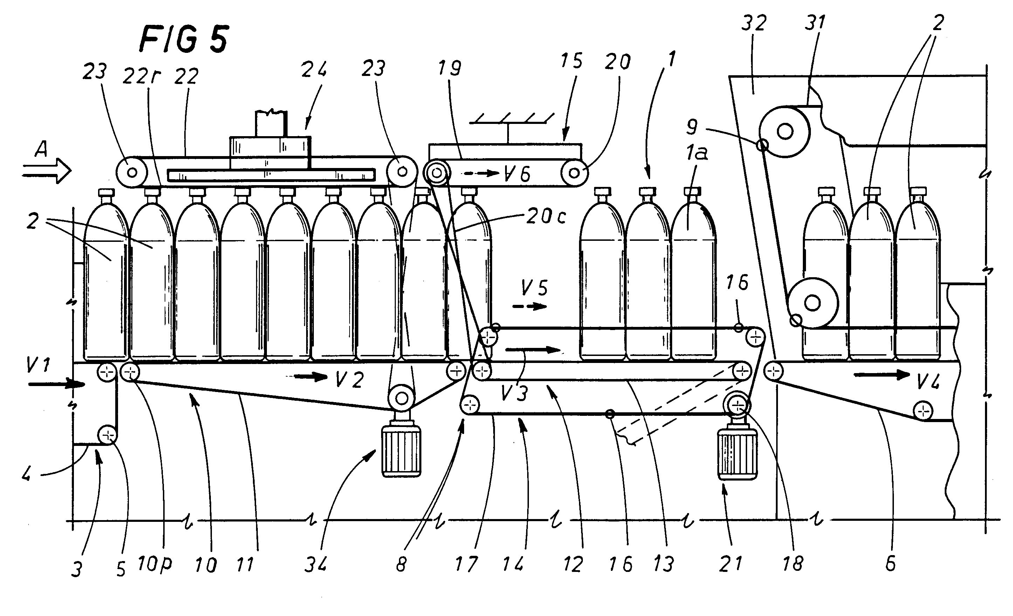

The crossbar 16 then accelerates further so that the next crossbar 16 can be inserted between a first group 1 of bottles and the front of the group of bottles behind in the space created by the acceleration of the first group 1 of bottles 2 on the fourth belt 13 (see Fig. 3). The second crossbar 16, therefore, causes the front of the next group of bottles 2 to continue moving for a few instants at speed V2 whilst the group 1, formed just before, moves apart from the bottles behind just enough to reach the second belt 6 and then accelerates to start the cycle over again with another crossbar 16 (see Figs.4 and 5); in the meantime, the groups at the front start arriving on the second belt 6 at speed V4, which is the same as speed V3.

The device disclosed by the present invention enables bottles to be fed and separated out into groups continuously and without necessarily changing any components when changing over to a different product to be wrapped; this is because the groups are formed and separated out by the crossbars being driven by a variable speed system.

Moreover, thanks to the acceleration system of the crossbars, the third and fourth belts of the collating device can be kept very short and, consequently, the machine as a whole is not unnecessarily encumbered and its overall dimensions reduced to a minimum.

The invention described can be subject to modifications and variations without thereby departing from the scope of the inventive concept which is defined in the following claims.

## Claims

1. A collating device for continuously fed products, applicable in particular to automatic machinery for wrapping groups (1) of bottles (2) arranged in several rows both crosswise, so as to form a front, and lengthwise; the said machinery being of the type comprising a continuous feed station (3) through which the bottles (2) move in a direction (A) and at a constant speed (V1), the said station (3) consisting of a first endless horizontal belt (4) fitted over a first series of motor-driven pulleys (5); collating means (8) being provided downstream of the said feed station (3) and operating on the bottles (2) in such a way as to divide them into preset groups (1); a transfer station operating at a speed (V4), located downstream of the collating means (8) with respect to the said direction of feed (A), and consisting of a second endless horizontal belt (6) fitted over a second series of motor-driven pulleys (7); first accompanying means (9) being provided at the second belt (6), moving along with the latter in a direction parallel to the said direction of feed (A), and designed to push each group (1) formed by the collating means (8) towards a wrapping station, the said device being characterized in that the said collating means (8) consist of:
- a station (10) for precollating and feeding the bottles (2) consisting of a third horizontal belt (11) located at the downstream end of the said feed station (3), with respect to the direction of feed (A), and running at a speed (V2) which is lower than the speed (V1) of the feed station (3);
- a station (12) for collating the bottles into groups (1), located between the precollating station (10) and the transfer station (6) and equipped with a fourth horizontal belt (13), which runs at a constant speed (V3) that is greater than the speed (V2) of the precollating station (10); second accompanying means (14) of the groups (1) of bottles (2) operating on the active branch (13r) of the fourth belt (13), the second means (14) running at a speed (V5) which varies in accordance with their position with respect to the said active branch (13r) and which is the same as the speed (V2) of the third belt (11) on coming into contact with the first bottle (1a) on the fourth belt (13) and at the outfeed end of the third belt (11) for a time equivalent to the distance travelled by a number of bottles (2) defining the size of the group (1) on the fourth belt (13) and then accelerating to a speed greater than the speed (V3) of the fourth belt (13) in such a way that the group (1) of bottles (2) moves further apart from the remaining front of bottles (2) behind it.

2. The device according to claim 1 characterized in that there are also provided means (15) to stabilize the bottles (2) at least on the fourth belt (13), the said means (15) being located partially opposite the fourth belt (13) at least at its infeed branch (13r) and operating on the tops of the bottles (2) during the acceleration of the said second accompanying means (14) to the speed (V3).

3. The device according to claim 1 characterized in that the said second accompanying means (14) consists of at least one pair of crossbars (16), each moving round with the belt (13) and coming into contact with the bottles (2) when these reach the active branch (13r) of the fourth belt (13), the said crossbars (16) being equidistant from each other and fixed at both ends to a pair of endless chains (17) fitted over a series of pulleys (18), one of which is driven by a motor (21).

4. The device according to claim 2 characterized in that the said stabilizing means (15) consist of a fifth endless belt (19) fitted over a pair of pulleys (20), at least one of which is connected to one of the pulleys of the fourth belt (13) and is equipped with a clutch unit (22) designed to engage and disengage the fifth belt (19) itself.

5. The device according to claim 1 characterized in that the said second accompanying means (14) are equipped with an independent motor (21).

6. The device according to claim 1 characterized in that the said precollating station (10) is equipped with a sixth belt (22) for stabilizing the bottles (2) located above the active branch of the third belt (11) forming an endless belt fitted over a pair of idle pulleys (23), and equipped with presser means (24) which operate on its active branch (22r) when the machine stops.

7. The device according to claim 1 characterized in that the said third belt (11) and the said second accompanying means (14) are driven by high-output servomotors.

## Patentansprüche

1. Vorrichtung zum Gruppieren von kontinuierlich zugeführten Gegenständen, insbesondere anwendbar für automatische Maschinen zur Verpackung von Gruppen (1) von Flaschen (2), die in mehreren Reihen angeordnet sind, sowohl in Querrichtung, um eine Front zu bilden, als auch in Längsrichtung; wobei die besagte Maschine von der Art ist, daß sie eine kontinuierliche Zuführstation (3) enthält, durch welche sich die Flaschen (2) in eine Richtung (A) und mit einer konstanten Geschwindigkeit (V1) bewegen, und wobei die besagte Zuführstation (3) aus einem ersten endlosen horizontalen Band (4) besteht, das um eine erste Gruppe von motorangetriebenen Scheiben (5) läuft; und stromabwärts der besagten Zuführstation (3) Gruppiermittel (8) vorgesehen sind, die auf die Flaschen (2) derart einwirken, daß selbige in vorbestimmbare Gruppen (1) unterteilt werden; eine mit einer Geschwindigkeit (V4) arbeitenden Übertragungsstation, die zu den Gruppiermitteln (8) stromabwärts in Bezug auf die besagte Förderrichtung (A) angeordnet ist und aus einem zweiten endlosen horizontalen Band (6) besteht, das um eine zweite Gruppe von motorangetriebenen Scheiben (7) läuft; erste, an dem zweiten Band (6) vorgesehene Begleitmittel (9), die sich entlang selbigem in einer Richtung bewegen, welche parallel zu der besagten Förderrichtung (A) ist, und geeignet sind, jede durch die Gruppiermittel (8) gebildete Gruppe (1) in Richtung einer Verpackungsstation zu schieben, wobei die besagte Vorrichtung dadurch gekennzeichnet ist, daß die besagten Gruppiermittel (8) bestehen aus:
- einer Station (10) zum Vorsortieren und Fördern der Flaschen (2), welche aus einem dritten horizontalen Band (11) besteht, das am in Bezug auf die Förderrichtung (A) stromabwärts liegenden Ende der besagten Zuführstation (3) angeordnet ist und mit einer Geschwindigkeit (V2) läuft, die kleiner ist als die Geschwindigkeit (V1) der Zuführstation (3);
- eine Station (12) zum Sortieren der Flaschen in Gruppen (1), welche zwischen der Vorsortierstation (10) und der Übertragungsstation (6) angeordnet ist und mit einem vierten horizontalen Band (13) ausgestattet ist, das mit einer konstanten Geschwindigkeit (V3) läuft, die größer ist als die Geschwindigkeit (V2) der Vorsortierstation (10); zweite Begleitmittel (14) der Gruppen (1) der Flaschen (2), die an dem aktiven Zweig (13r) des vierten Bandes (13) wirken, wobei die zweiten Mittel (14) mit einer Geschwindigkeit (V5) laufen, die entsprechend zu ihrer Stellung in Bezug auf den besagten aktiven Zweig (13r) variiert und gleich groß ist wie die Geschwindigkeit (V2) des dritten Bandes (11), wenn selbige in Kontakt kommen mit der ersten Flasche (1a) auf dem vierten Band (13), und am Austrittsende des dritten Bandes (11) für eine Zeitdauer, die äquivalent zu der durch eine Anzahl von Flaschen (2) durchlaufenen Distanz ist, welche die Größe der Gruppe (1) auf dem vierten Band (13) definiert, und daraufhin auf eine Geschwindigkeit beschleunigt, die größer ist als die Geschwindigkeit (V3) des vierten Bandes (13), so daß sich die Gruppe (1) von Flaschen (2) weiter von der hinter derselben verbleibenden Front von Flaschen (2) wegbewegt.

2. Vorrichtung nach Anspruch 1, dadurch gekennzeichnet, daß auch Mittel (15) vorgesehen sind zum Stabilisieren der Flaschen (2) wenigstens auf dem vierten Band (13), wobei die besagten Mittel (15) teilweise gegenüber dem vierten Band (13) wenigstens an dessen Eintrittszweig (13r) angeordnet sind und während der Beschleunigung der besagten zweiten Begleitmittel (14) auf die Geschwindigkeit (V3) auf die oberen Enden der Flaschen (2) wirken.

3. Vorrichtung nach Anspruch 1, dadurch gekennzeichnet, daß die besagten zweiten Begleitmittel (14) wenigstens ein Paar von Querarmen (16) aufweisen, von denen sich jeder mit dem Band (13) rundbewegt und mit den Flaschen (2) in Kontakt kommt, wenn diese den aktiven Zweig (13r) des vierten Bandes (13) erreichen, wobei die besagten Querarme (16) in gleichen Abstand zueinander angeordnet sind und mit beiden Enden an ein Paar von endlosen Ketten (17) befestigt sind, die um eine Reihe von Scheiben (18) laufen, von denen eine durch einen Motor (21) angetrieben wird.

4. Vorrichtung nach Anspruch 2, dadurch gekennzeichnet, daß die besagten Stabilisierungsmittel (15) ein fünftes endloses Band (19) enthalten, das um ein Paar von Scheiben (20) läuft, von denen wenigstens eine mit einer der Scheiben de vierten Bandes (13) verbunden ist und mit einer Kupplungseinheit (22) versehen ist, die geeignet ist, das fünfte Band (19) selbst zu aktivieren und außer Betrieb zu setzen.

5. Vorrichtung nach Anspruch 1, dadurch gekennzeichnet, daß die besagten zweiten Begleitmittel (14) mit einem unabhängigen Motor (21) versehen sind.

6. Vorrichtung nach Anspruch 1, dadurch gekennzeichnet, daß die besagte Vorsortierstation (10) mit einem sechsten Band (22) ausgestattet ist zur Stabilisierung der Flaschen (2), die auf dem aktiven Zweig des dritten Bandes (11) angeordnet sind, wobei das besagte sechste Band ein endloses Band bildet, das um ein Paar von Losscheiben (23) angeordnet ist, und die besagte Vorsortierstation mit Drückhaltemitteln (24) versehen ist, die auf dem aktiven Zweig (22r) derselben wirken, wenn die Maschine anhält.

7. Vorrichtung nach Anspruch 1, dadurch gekennzeichnet, daß das besagte dritte Band (11) und die besagten zweiten Begleitmittel (14) durch einen Hochleistungsservomotor angetrieben werden.

## Revendications

1. Un dispositif sélectionneur de produits alimentés en continu, applicable en particulier à des machines automatiques pour l'emballage de groupes (1) de bouteilles (2) disposées en plusieurs rangées soit transversales, définissant un front, soit longitudinales; lesdites machines sont du type comprenant une station d'alimentation continue (3) au travers de laquelle les bouteilles (2) se déplacent dans une direction (A) et à une vitesse constante (V1), ladite station (3) consistant en un premier tapis horizontal fermé (4) adapté sur une première série de poulies motorisées (5); les moyens de séparation (8) étant placés en aval de ladite station d'alimentation (3) et opérant sur les bouteilles (2) de manière à les diviser en groupes prédéterminés (1); une station de transfert opérant à une vitesse (V4), localisée en aval des moyens de séparation (8) par rapport à ladite direction d'alimentation (A), et consistant en un second tapis horizontal fermé (6) adapté sur une seconde série de poulies motorisées (7); les premiers moyens d'accompagnement (9) étant placés en correspondance du second tapis (6), se déplaçant le long de celui-ci dans une direction parallèle à ladite direction d'alimentation (A), et conçus pour pousser chaque groupe (1) formé par les moyens de séparation (8) vers une station d'emballage, ledit dispositif étant caractérisé en ce que lesdits moyens (8) consistent en:
- une station de pré-séparation et d'alimentation (10) de bouteilles (2) consistant en un troisième tapis horizontal (11) situé à l'extrémité en aval de ladite station d'alimentation (3), par rapport à la direction d'alimentation (A), et fonctionnant à une vitesse (V2) inférieure à la vitesse (V1) de la station d'alimentation (3);
- une station (12) pour séparer les bouteilles en groupes (1), située entre la station de pré-séparation (10) et la station de transfert (6) et équipée d'un quatrième tapis horizontal (13), qui fonctionne à une vitesse constante (V3) supérieure à la vitesse (V2) de la station de pré-séparation (10); des seconds moyens d'accompagnement (14) des groupes (1) de bouteilles (2) opérant sur la branche active (13r) du quatrième tapis (13), les seconds moyens (14) fonctionnant à une vitesse (V5) qui varie en accord avec leur position par rapport à ladite branche active (13r) et qui est la même que la vitesse (V2) du troisième tapis (11) en entrant en contact avec la première bouteille (1a) sur le quatrième tapis (13) et à l'extrémité de sortie du troisième tapis (11) pour un temps équivalent à la distance parcourue par un nombre de bouteilles (2) définissant la taille du groupe (1) sur le quatrième tapis (13) et ensuite accélérant à une vitesse supérieure à la vitesse (V3) du quatrième tapis (13) de manière à ce que le groupe (1) de bouteilles (2) se déplace en s'éloignant du front restant de bouteilles derrière lui.

2. Le dispositif selon la revendication 1 caractérisé en ce que sont également prévus des moyens (15) pour stabiliser les bouteilles (2) au moins sur le quatrième tapis (13), lesdits moyens (15) étant situés partiellement opposés au quatrième tapis (13) au moins sur sa branche d'entrée (13r) et opérant sur les sommets des bouteilles (2) pendant l'accélération desdits second moyens d'accompagnement (14) à la vitesse (V3).

3. Le dispositif selon la revendication 1 caractérisé en ce que lesdits seconds moyens d'accompagnement (14) consistent en au moins une paire de barres transversales (16), chacune d'entre elles se déplaçant circulairement avec le tapis (13) et entrant en contact avec les bouteilles (2) lorsque celles-ci atteignent la branche active (13r) du quatrième tapis (13), lesdites barres transversales (16) étant équidistantes l'une de l'autre et fixées en leurs deux extrémités à un paire de chaînes fermées (17) adaptées sur une série de poulies (18), l'une desquelles est entraînée par un moteur (21).

4. Le dispositif selon la revendication 2 caractérisé en ce que lesdits moyens stabilisants (15) consistent en un cinquième tapis fermé (19) adapté sur une paire de poulies (20), dont l'une au moins est reliée à l'une des poulies du quatrième tapis (13) et est équipée d'une unité à friction (22) conçue pour activer ou désactiver le cinquième tapis (19) lui-même.

5. Le dispositif selon la revendication 1 caractérisé en ce que lesdits seconds moyens d'accompagnement (14) sont équipés d'un moteur indépendant (21).

6. Le dispositif selon la revendication 1 caractérisé en ce que ladite station de pré-séparation (10) est équipée d'un sixième tapis (22) pour stabiliser les bouteilles (2) situé au-dessus de la branche active du troisième tapis (11) formant un tapis fermé adapté sur une paire de poulies libres (23), et équipé de moyens presseurs (24) opérant sur sa branche active (22r) lorsque la machine s'arrête.

7. Le dispositif selon la revendication 1 caractérisé en ce que ledit troisième tapis (11) et lesdits seconds moyens d'accompagnement (14) sont entraînés par des servomoteurs à haut rendement.
